# EUROPEAN PATENT APPLICATION

(11) **EP 0 685 708 A2**
(43) Date of publication of application: **06.12.1995**
(21) Application number: 95302504.6
(22) Date of filing: 13.04.1995
(51) Int. Cl.: G01D 5/26, G01D 5/347

(54) **Compact disk encoder**

(30) Priority: 01.06.1994 IL 10986094
(71) Applicant: SCITEX CORPORATION LTD., IL-46103 Herzlia Bet (IL)
(72) Inventor: Benizri, Ilan, Herzlia (IL)
(74) Representative: Hillier, Peter

(57) **Abstract**

A digital shaft encoder (100) for a rotatable assembly (102), which includes a compact disk (104) featuring digitally encoded information related to the angular position of the rotatable assembly (102), wherein the compact disk (104) rotates in conjunction with the rotatable assembly (102). The encoder (100) further includes an optical pick-up (106) for reading the digitally encoded information.

## Description

### FIELD AND BACKGROUND OF THE INVENTION

The present invention relates to encoders in general and in particular to digital shaft encoders.

Digital shaft encoders are used for providing position, direction, speed and displacement information of rotatable assemblies associated with devices ranging from low-tech consumer devices, for example, washing machines, to high-tech devices, for example, drum plotters, such as the Dolev, available from Scitex Ltd., Israel. Digital shaft encoders are basically of two types: absolute encoders for applications where position information is of prime importance and incremental encoders for applications where speed of rotation and/or incremental travel of the rotation assembly is of prime importance.

Absolute encoders typically output unique codes for each position within a single revolution of a rotatable assembly and therefore any position within a single revolution can be determined without a starting address. Absolute encoders use either a brush assembly to make direct electrical contact with electrically conductive paths on a coded disk or a photo-electric assembly for reading opaque and transparent segments on a coded disk.

Incremental encoders typically output pulse signals as a rotatable assembly rotates for providing travel, velocity and acceleration information. Incremental encoders typically include a disk having opaque lines which are aligned with a grid assembly such that light passing through the transparent parts of the disk are sensed by photosensors. The output from the photosensors is a sinusoidal wave which can be transformed into square-wave pulses for digital circuitry compatibility. A second track of opaque lines can be provided for determining the direction of rotation or for use as a home position indication.

The conventional digital shaft encoders suffer from a number of disadvantages which include low resolution particularly for the absolute encoders and high cost for high resolution incremental encoders having gratings in the order of 36,000 lines.

Therefore, it would be highly advantageous to have a low cost, high resolution digital shaft encoder which can be readily adapted as an absolute encoder and an incremental encoder for use in both low-tech and high-tech devices.

### SUMMARY OF THE INVENTION

The main object of the present invention is to provide a low cost, high resolution digital shaft encoder which can be readily adapted as an absolute encoder and an incremental encoder. The encoder can provide position, direction, speed and displacement information depending on its implementation in both low-tech and high-tech devices.

Hence, according to the present invention, there is provided a digital shaft encoder for a rotatable assembly, comprising: (a) a compact disk including digitally encoded information related to the angular position of the rotatable assembly, wherein the compact disk rotates in conjunction with the rotatable assembly; and (b) an optical pick-up for reading the digitally encoded information.

According to a feature of the present invention, the digitally encoded information on the compact disk can take one of several forms depending on whether the encoder is to be implemented as an absolute encoder, an incremental encoder or a combined absolute-incremental encoder. Furthermore, it is another feature of the present invention that the optical pick-up can be rigidly mounted with respect to the compact disk regardless of the type of digitally encoded information provided thereon. The optical pick-up is typically deployed over the outermost track or the innermost track for ease of set-up of the encoder.

First, the digitally encoded information can include a home position indication for marking a pre-determined home position of the rotatable assembly. The home position indication is typically digitally encoded as at least a portion of a frame and deployed on either the outermost or innermost track of the compact disc. The home position indication can be used for resetting the rotatable assembly to its home position or for counting the number of revolutions rotated by the rotatable assembly in an odometer-like fashion.

Second, the digitally encoded information can include a plurality of pulses for indicating incremental changes in position of the rotatable assembly. The pulses are typically digitally encoded as at least one bit and deployed on either the outermost track or innermost track of compact disc. The pulses can be used for indicating each incremental advance of the rotation assembly for determining travel displacement, angular velocity and acceleration in a tachometer-like fashion.

Third, the digitally encoded information can include two tracks of pulses characterized in that the tracks have a pulse phase relationship therebetween such that either clockwise or counter-clockwise rotation can be distinguished by means of the sign of the phase between the tracks.

Fourth, the digitally encoded information can include both the home position indication and pulses such that the encoder can act as a combined absolute-incremental encoder by providing a unique output of an angular position of the rotatable assembly from its home position in terms of the number of pulses from the home position indication.

Alternatively, to act as just an absolute encoder, the digitally encoded information can include having all the frames of a track being given a unique code such that any position within a single revolution can be determined without a starting address.

### BRIEF DESCRIPTION OF THE DRAWINGS

The invention is herein described, by way of example only, with reference to the accompanying drawings, wherein:
FIG. 1 shows a schematic illustration of a preferred embodiment of a digital shaft encoder constructed and operative according to the teachings of the present invention; and
FIGS. 2a-2d show schematic illustrations of compact disks including different digitally encoded information.

### DESCRIPTION OF THE PREFERRED EMBODIMENTS

The present invention is of digital shaft encoders for providing position, direction, speed and displacement information of rotatable assemblies.

The principles and operation of the digital shaft encoders according to the teachings of the present invention may be better understood with reference to the drawings and the accompanying description.

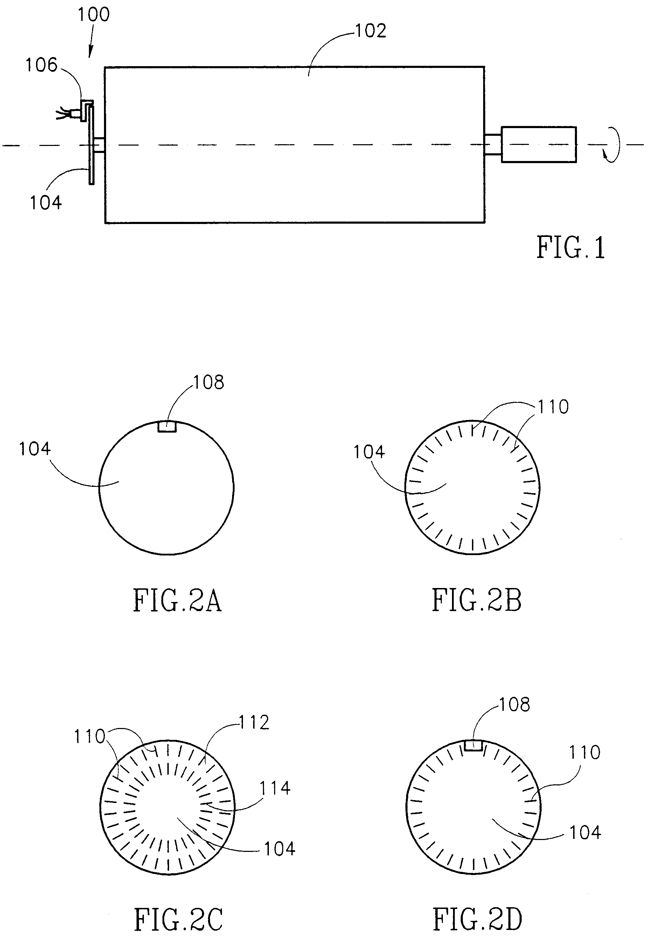

With reference now to Figure 1, there is shown a preferred embodiment of an encoder, generally designated **100**, for providing information with respect to a rotatable assembly **102** associated with a device (not shown). Encoder **100** includes a compact disk **104** including digitally encoded information and an optical pick-up **106** for reading the digitally encoded information as known in the art. Depending on the implementation of encoder **100**, information about the position, direction, speed, acceleration and travel displacement of rotatable assembly **102** can be provided. Rotatable assembly **102** can be configured in a number of forms, including, but not limited to, a drum, a table, etc.

Compact disk **104** within the context of the present invention refers to the type of disk initially popularized in sound reproduction systems. Salient features of compact disk technology relevant to the present invention are as follows. First, that the compact disks are 120 mm diameter disks capable of storing some 500-600 Mbytes of information in which pit/land or land/pit transitions represent "1"s while the flat areas of lands and pits represent "0"s. Second, that 8 real data bits are modulated into 14 channel bits by a method known as eight-to-fourteen modulation (EFM) and stored as frames consisting of 1 control byte, 24 data bytes and two groups of 4 error correction bytes. Third, that approximately 680 frames including approximately 400,000 bits are deployed along a single track such that compact disks display a resolution of approximately 4,000 pulses per rum. Fourth, that the tracks are arranged as either concentric tracks similar to a magnetic disk or as spiral tracks similar to vinyl phonograph records. And finally, that they are low cost in comparison with conventional encoders currently incorporated in both low-tech and high-tech devices.

However, one respect in which encoder **100** differs from conventional CD players is that optical pick-up **106** can be rigidly mounted with respect to compact disk **104** such that it reads typically only one track. Optical pick-up **106** is typically located to read either the innermost or the outermost track of compact disk **104** for ease of set-up of encoder **100**.

With reference now to Figures 2a-2d, it is a particular feature of the present invention that the digitally encoded information on compact disk **104** can take one of several forms depending on whether encoder **100** is to be implemented as an absolute encoder, an incremental encoder or a combined absolute-incremental encoder.

First, the digitally encoded information can include a home position indication **108** for marking a pre-determined home position of rotatable assembly **102**. Home position indication **108** is typically digitally encoded as at least a portion of a frame and deployed on either the outermost track or innermost track of compact disk **104**. Home position indication **108** can be used for resetting rotatable assembly **102** to its home position or for counting the number of revolutions rotated by rotatable assembly **102** in an odometer-like fashion.

Second, the digitally encoded information can include a plurality of pulses **110** for indicating incremental changes in position of rotatable assembly **102**. Pulses **110** are typically digitally encoded as at least one bit and deployed on either the outermost track or innermost track of compact disk **104**. Pulses **110** can be used for indicating each incremental advance of rotation assembly **102**, for counting its travel displacement and for determining its angular velocity and acceleration in a tachometer-like fashion.

Third, the digitally encoded information can include two tracks **112** and **114** of pulses **110** characterized in that they have a pulse phase relationship therebetween such that either clockwise or counter-clockwise rotation of rotation assembly **102** can be distinguished by means of the sign of the phase of pulses **110** read from tracks **112** and **114**.

Fourth, the digitally encoded information can include both home position indication **108** and pulses **110** such that encoder **100** can act as a combined absolute-incremental encoder by providing a unique output of an angular position of rotatable assembly **102** from its home position in terms of the number of pulses from home position indication **108** as counted by optical pick-up **106**. Alternatively, the digitally encoded information can include having all the frames of a track being given a unique code such that any position within a single revolution can be determined without a starting address.

Hence, it can now be appreciated that encoder **100** can be readily adapted for use with devices ranging from low-tech consumer items such as washing machines, dishwashers, etc. to high-tech items such as drum scanners. For example, in a washing machine, encoder **100** can be used to control the rpm of a drum while in a drum plotter, encoder **100** can be used for indicating to a controller the angular position of a drum.

While the invention has been described with respect to a limited number of embodiments, it will be appreciated that many variations, modifications and other applications of the invention may be made.

## Claims

1. A digital shaft encoder (100) for a rotatable assembly (102) comprising:
(a) a compact disk (104) including digitally encoded information related to the angular position of the rotatable assembly (102), wherein said compact disk (104) rotates in conjunction with the rotatable assembly (102); and
(b) An optical pick-up (106) for reading said digitally encoded information.

2. An encoder according to claim 1, wherein said digitally encoded information includes a home position indication (108) for indicating a predetermined home position of the rotatable assembly (102).

3. An encoder according to claim 2, wherein said home position indication (108) is digitally encoded as at least a portion of a frame.

4. An encoder according to claim 2, wherein said home position indication is deployed on the innermost track or the outermost track of said compact disk (104).

5. An encoder according to claim 1, wherein said digitally encoded information includes a plurality of pulses (110) for indicating incremental change in position.

6. An encoder according to claim 5, wherein said each one of said plurality of pulses (110) is digitally encoded as at least a single bit.

7. An encoder according to claim 5, wherein said plurality of pulses (110) are deployed on the innermost track or the outermost track of said compact disk (104).

8. An encoder according to claim 5, wherein said digitally encoded information also includes a home position indication (108).

9. An encoder according to claim 5, wherein said digitally encoded information include two tracks of pulses (112, 114) for indicating the direction of rotation of the rotatable assembly (102).

10. An encoder according to claim 1, wherein said digitally encoded information includes a plurality of addresses for indicating a plurality of predetermined positions of the rotatable assembly (102).

11. An encoder according to claim 10, wherein each one of said plurality of addresses is digitally encoded as at least a portion of a frame.

12. An encoder according to claim 10, wherein said plurality of addresses is deployed on the innermost or the outermost track of said compact disk (104).

13. An encoder according to claim 1, wherein said optical pick-up (106) is rigidly mounted with respect to said compact disk (104).

14. An encoder according to claim 1, wherein the rotatable assembly (102) is a drum or a table.

15. The encoder as in claim 1 used as an odometer, a tachometer, an absolute encoder or an incremental encoder.
